# EUROPÄISCHE PATENTSCHRIFT

(11) **EP 2 049 398 B1**
(45) Veröffentlichungstag und Bekanntmachung des Hinweises auf die Patenterteilung: **27.04.2011**
(21) Anmeldenummer: 06829161.6
(22) Anmeldetag: 28.11.2006
(51) Int. Cl.: B64F 1/36

(54) **PASSAGIERTERMINAL AUS MOBILEN RAUMEINHEITEN**
PASSENGER TERMINAL CONSISTING OF MOBILE ROOM UNITS
TERMINAL PASSAGERS CONSTITUE D'UNITES SPATIALES MOBILES

(30) Priorität: 28.11.2005 DE 202005018751 U
(43) Veröffentlichungstag der Anmeldung: 22.04.2009
(73) Patentinhaber: A. Kerboua Holding B.V., 6022 EC Weert (NL)
(72) Erfinder: ZSCHORNACK, Norbert, 10117 Berlin (DE); LATZEL, Wolfgang, 10555 Berlin (DE)
(74) Vertreter: Wablat Lange Karthaus
(86) Internationale Anmeldenummer: PCT/EP2006/011414
(87) Internationale Veröffentlichungsnummer: WO 2007/060018

(56) Entgegenhaltungen:
- EP-A2- 1 070 799
- WO-A-94/05879
- WO-A-2005/023651
- GB-A- 2 008 510
- US-A- 3 885 368

## Beschreibung

Die Erfindung betrifft ein Passagierterminal aus mobilen Raumeinheiten. Passagierterminals werden für Flughäfen, Seehäfen aber auch für große Bahnhöfe, Busbahnhöfe und ähnliches benötigt.

Ein Passagierterminal der hier beschriebenen Art kann universell Verwendung finden, wird jedoch im Wesentlichen am Beispiel eines Flughafens, insbesondere auch eines international nutzbaren Flughafens, beschrieben. Weltweit befinden sich die Passagierterminals der Flughäfen an Kapazitätsgrenzen, da die Passagierzahlen jährlich stark steigen. In gleicher Weise steigen die Anforderungen an die Sicherheitsausstattung, insbesondere bei internationalen Flughäfen, die Forderung nach hoher Umschlagskapazität für Gepäck und Durchsatz der Passagiere. Des Weiteren sind viele Terminals zu modernisieren, was derzeit in Regel nur durch komplette Umbauten geht. Zur Kapazitätserhöhung oder auch zur Modernisierung der An- und Abflugbereiche von Terminals werden in Regel herkömmliche Erweiterungs- oder Neubauten konventionell vor Ort erstellt. Die witterungsabhängige Realisierung des Terminals am Bauort beeinflusst die Bauzeit wesentlich und kann zu gravierenden Zeitverzögerungen, Kostenerhöhungen oder Einnahmeverlusten an den Abfertigungsanlagen führen. In Regel benötigt man für den technischen Ausbau einen hohen Zeitaufwand und sehr viel Fachpersonal, da vor Ort nach Fertigstellung des Gebäudes die vielfachen Schnittstellen, insbesondere bei hochtechnisierten Terminals ausprobiert werden müssen.

Terminals werden heute, wie zum Beispiel der neue Flughafen in Bangkok oder auch das Terminal 2 des Münchner Flughafens in Glas- und Stahlbauweise mit entsprechend großen und stabilen Hohlprofilen, teils mit sich wiederholenden Skelettrastern, hergestellt.

In der Bautechnik ist eine Reihe von Modulbauweisen bekannt, die jeweils einzeln für sich je nach Gebäudezweck und Raumbauart Verwendung finden. Es ist bekannt Gebäudegrundrisse zu rastern. Es ist ebenfalls bekannt, Teile, beispielsweise eines Wohngebäudes vorgefertigt und in einen ansonsten vor Ort zu errichtenden Bau einzusetzen. Bei Wohngebäuden, beispielsweise im Holztafelbau werden komplette Wohnhäuser in einer Fabrik vorgefertigt und in Tafeln zur Baustelle geliefert, die dann nach den Architekturplänen zusammengesetzt werden. Es ist ebenfalls bekannt auf Baustellen Containerdörfer zu errichten, die für die Baumannschaft als Büro, Unterkunft und Sanitäranlagen dienen können. In seltenen Fällen werden für Krankenhäuser oder Wohnheime Module vorgefertigt, die in einer Baugröße geplant werden, so dass sie eben noch zur Baustelle transportiert werden können, beispielsweise angepasst auf die Höhe für die nächstgelegenen Brücke.

Es ist mit der US 2005/0138867 A1 vorgeschlagen worden, verschiedene ökologische Haustypen zu entwickeln für die verschiedensten Einsatzzwecke. Ein Baukastensystem oder Modulsystem ist nicht offenbart.

Aus der US 2003/0213184 A1 ist bekannt für die Kontrolle/Personenkontrolle von Passagieren und Gepäck durch ähnlich oder identisch konstruierte Einheiten in Einzel- oder Vielfachanordnung nebeneinander oder hintereinander in einem Flughafen anzuordnen. Eine Modulbauweise vorfabrizierter Einheiten ist nicht offenbart.

Eine vorfabrizierbare Baueinheit zeigt die Druckschrift US 2002/0189173 A1, eine Energieversorgungs- oder Entsorgungseinrichtung, die als komplettes Modul vorgefertigt an einen Verwendungsort verbracht werden kann. Die Module können alternativ oder additiv ausgestattet sein mit einer Elektroenergieerzeugungsanlage, einer Wasserversorgungsanlage, einer Abwasseranlage oder ähnlichem. Derartige Container können dann beispielsweise an Wohngebäude, die vor Ort errichtet werden angeflanscht werden, wenn entsprechende Schnittstellen vorhanden sind.

Die vorliegende Erfindung geht davon aus, dass ein derartiger Container für die Primärenergieversorgung oder Entsorgung in Kombination mit der hier zu beschreibenden Erfindung Verwendung finden kann.

Eine ähnliche Baueinheit wird in US 3,885,368 A1 offenbart. Diese Druckschrift stellt den nächsteliegenden Stand der Technik das und offenbart den Oberbegriff des Anspruchs 1.

Aus dem zitierten Stand der Technik heraus ergibt sich für die vorliegende Erfindung das Problem, ein Passagierterminal und eine Herstellverfahren dafür vorzuschlagen, das in kürzest möglicher Zeit an allen Orten der Welt funktionsfähig und schlüsselfertig geliefert und errichtet werden kann.

Das Problem wird erfindungsgemäß gelöst durch die Merkmale der Ansprüche 1 und 13. Weiterbildungen der Erfindung sind in den Unteransprüchen erfasst.

Die Lösung umfasst zunächst ein Passierterminal, wie es typischerweise an internationalen Flughäfen Verwendung finden kann, bestehend aus mobilen Raumeinheiten in Modulbauweise, welche alle für den Passagierverkehr notwendigen Einrichtungen, mindestens für die Terminalbereiche Passagiererfassung / Check-In, Ankunftsräume, Abgangsräume, Gepäckabfertigung, terminalspezifische Technik, Verwaltung, Gebäudetechnik enthält, aus modulartigen zu einander komplementären, für sich stabilen Raumeinheiten vorfertigbar sind und mittels üblicher Transportfahrzeuge für genormte Container zu Lande, zu Wasser und zu Luft an den vorbestimmten Aufstellort transportiert und dort in kurzer Zeit zu einem funktionsfähigen Passagierterminalgebäude nach vorgegebenem Raster zusammengefügt werden können.

Dabei sollen Raumeinheiten verwendet werden, die in ihrer Länge und Breite einem nach DIN/ISO genormten Transportcontainer entsprechen und in der Höhe für den Verwendungszweck typisiert sind.

Beispielsweise kommt eine Raumeinheit zum Einsatz, die im Wesentlichen einem Boxcontainer mit der Bezeichnung 1C nach DIN/ISO entspricht.

Jedenfalls sind alle Raumeinheiten quaderförmig ausgebildet und haben einen Stahlrahmen, nicht wie die Boxcontainer aus beliebigen Profilen, sondern aus genormten Hohlprofilen, beispielsweise Mannesmann-Stahl-Hochbauprofilen mit vorzugsweise rechteckigem Querschnitt. Die Raumeinheiten bestehen daher zunächst aus einem Rahmen aus Hohlprofilen, wobei die Hohlprofile die Kanten des Quaders bilden. Nach Bedarf können darin Böden oder Seitenwände oder Decken eingezogen werden, wie dies von den Boxcontainern bekannt ist. Es kann jedoch auch ein solcher Stahlrahmen als modulare Raumeinheit an sich verwendet werden, beispielsweise als Stützkonstruktion für weitere darauf oder daneben zu platzierende Raumeinheiten.

Derartige Raumeinheiten, die standardmäßig vorgefertigt werden können in einer Fabrik, die witterungsunabhängig ist, können sodann mit üblichen Verkehrsmitteln, nämlich Transportfahrzeugen, die für den Containertransport geeignet sind an einen vorbereiteten Standort transportiert werden. Weltweit ist die gesamte Umschlagtechnik darauf ausgelegt, derartige Container von einem Verkehrsmittel, beispielsweise einem Seeschiff auf die Eisenbahn, ein Flugzeug oder einen Lastkraftwagen umzuschlagen und weiterzutransportieren. Die Stahlrahmen der Module sind den statischen Bedingungen entsprechend ihren Anforderungen als ein Gebäudeteil berechnet, aber auch für dynamische Belastungen während des Transportes mit den unterschiedlichen Transportmitteln und gegebenenfalls dynamischen Belastungen, die von Einbauten in den Modulen herrühren, ausgelegt.

Mit solchen Modulen kann erfindungsgemäß ein Kleinflughafen realisiert werden oder auch ein Flughafen mit einem Terminal erweitert werden oder in Katastrophenfällen ein temporäres Flugplatzterminal errichtet werden.

Grundsätzlich gliedert sich ein solches Terminalgebäude in mindest fünf Funktionsbereiche, nämlich den Passagierabflug, die Passagierankunft, die Passagierabfertigung bzw. Gepäckabfertigung eine öffentliche oder kommerzielle Fläche, zum Beispiel für Verkaufsläden oder für Wartehallen sowie einen Trakt für die Verwaltung und technische Einheiten für das Gebäude sowie gegebenenfalls für die Terminalfunktion im Zusammenhang mit dem Flughafen oder Seehafen.

Die zitierten Normen für Container umfassen beispielsweise so genannte 20-Fuß- ISO-Transportcontainer mit einer Länge von 20 Fuß entsprechen gut 6 Meter und eine Breite von etwa 8-Fuß entsprechend knapp 2,5 m. In dem standardisierten Containerbau haben diese Container auch eine Höhe von etwa 8 Fuß. Für Gebäude wird eine andere Höhe gewählt, vorzugsweise bei Terminals eine Höhe von etwa 3,20 m Brutto oder 2,75 m Innenmaß der Container, was durchgängig den üblichen Raumhöhen in derartigen Gebäuden entspricht. Anstelle von 20 Fuß langen Containern gleicher Breite und Höhe können auch 30-Fuß- oder 40-Fuß-Container Verwendung finden bei dieser Erfindung. Die Bruttogewichte (gesamt zulässiges Gewicht) betragen entsprechend der Containergröße etwa 20, 25 oder 30 Tonnen. Diese Gewichte lassen eine ausreichende Zuladung für eine komplette Vorfertigung der einzelnen Module als voll funktionsfähige Einheiten mit entsprechenden Schnittstellen zu Nachbarmodulen zu.

Ein Terminal besteht in der Regel aus mehreren Etagen beispielsweise vier Ebenen und kann baukastenmäßig aus den genannten Modulen zusammengesetzt werden.

Das Verfahren zur Erstellen eines solchen Passagierterminals umfasst die folgenden Schritte, die durch weitere Schritte ergänzt werden können:
- Konstruieren des Terminals für eine Standardgröße mit einer geringsten angenommenen Passagierzahl, beispielsweise von 500.000 Passagieren pro Jahr.
- In ein derartiges Terminal werden alle Funktionsbereiche, die erwünscht sind eingebaut, mindestens jedoch die zuvor zitierten Bereiche für die Passagiererfassung bzw. -abfertigung, ebenso die Gepäckabfertigung, eine Eingangszone oder Ankunftszone, eine Abgangszone sowie öffentliche und kommerzielle Flächen für den Verkauf von Speisen und Getränken oder von anderen typischen Geschäften für Dutyfree-Artikel oder Reisebedarf sowie die Terminaltechnologie, beispielsweise die Überwachung der Befeuerung eines Flugplatzes, die Verwaltung und die Gebäudetechnik wie die gesamte Energieabteilung und den Brandschutz u.ä.;
- nach diesem Schritt erfolgt ein planerisches Zerteilen des Terminals horizontal in zwei Achsen und vertikal in der dritten Achse, insgesamt also in ein kubisches Raster bzw. Raumeinheiten mit Längen und Breiten entsprechend genormter DIN / ISO-Container mit einer zu fixierenden bzw. vorzugebenden Höhe.
- Danach werden die Funktionsbereiche optimiert auf die Größe der Raumeinheiten und entsprechende Schnittstellen zwischen den Raumeinheiten vorgesehen, damit Türen, Fenster oder Energieleitungen an der richtigen Stelle miteinander gekoppelt werden können und ein hoher Vorfertigungsgrad möglich ist;
- die Raumeinheiten werden vorgefertigt und zum Aufstellort transportiert, komplett ausgestattet mit funktionsfähigen Bauteilen entsprechend dem späteren Verwendungszweck.
- Am Aufstellort wird baukastenmäßig das Terminalgebäude aus den Modulen zusammengesetzt.

Zwischenzeitlich - während der Herstellung der Raumeinheiten - konnte am Aufstellort für das Terminal dafür gesorgt werden, dass alle erforderlichen Energie- und Infrastrukturanschlüsse wie Straßen, Wege, Beleuchtung usw. sowie Fundamente unabhängig vorbereitet werden, bis zu Schnittstellen, an denen sie mit dem Terminalgebäude gekoppelt werden können.

Ein derartig vorbereitetes Terminal kann durch Einfügen oder Anfügen von Modulen soweit vergrößert werden, dass die Zahl der Passagiere, die abgefertigt werden sollen, beliebig erhöht werden kann, wobei es sich herausgestellt hatte, dass bei einer Planung von Terminals von 500.000 Passagieren eine Ausweitung auf bis zu 5.000.000 Passagieren jährlich problemlos möglich ist. Größere Terminals sind ebenfalls herstellbar, dann sollte jedoch von einer Prototypvariante ausgegangen werden, bei der von vornherein mindestens 1.000.000 oder 3.000.000 Passagieren jährlich als Nutzer vorgesehen sind.

Nicht alle Teile des Terminalgebäudes müssen aus derartigen Raumeinheiten bestehen. Es können auch hallenartige Bereiche, wie z.B. die Wartezone für Passagiere, als stützenfreie Räume gestaltet werden, indem von einem Modul zum anderen ein derartiger Raum im Gebäude überspannt wird. Die für das Überspannen erforderlichen Tragsysteme oder Stahlträger u.ä. können in ähnlicher Weise wie die Module vorgefertigt werden und mittels leerer Raumeinheiten, die später vor Ort im Terminal nur eine Stützfunktion haben, zur Baustelle bzw. zum Aufstellort transportiert werden.

Die Stahlrahmen der Raumeinheiten sind so berechnet, dass sie sämtliche vertikalen Lasten aus Dach- und Deckenkonstruktionen auffangen können und in benachbarte oder unter ihn angeordnete Raummodule die Last abgeführt und gestützt werden kann. Die Raumeinheiten sind dabei auch so konstruiert, dass sie den Anforderungen für den Transport über Land, zu Wasser oder in der Luft gewachsen sind.

Das Verfahren zur Erstellung eines Passagierterminals in den ersten beiden Stufen wurde zuvor beschrieben.

In der dritten Phase wird parallel zur Errichtung der Infrastruktur und auf der Baustelle die Vorfertigung der Module realisiert. Dabei werden im Produktionsablauf sämtliche planerisch vorgesehenen Innenausbauten und technischen Einrichtungen bereits während der Vorfertigung in die Module eingebaut. Modulübergreifende Installationen werden so vorgerichtet, dass sie am Aufstellort mit geringem Aufwand verbunden werden können, z.B. durch Press-, Schraub- oder Quetschverbindungen der entsprechenden Energieleitungen. Ebenso kann die komplette Möblierung bereits während der Vorfertigung in Raumeinheiten eingebaut werden; diese ist nur für den Transport entsprechend zu sichern.

In der vierten Phase werden die vorgefertigten Module für den Transport gegebenenfalls wetterfest gesichert und dann über entsprechende Transportmittel zum Aufstellort verbracht. Bereits während der Transportphase der ersten Module werden die letzten Module im Herstellerwerk vorgefertigt und für den Transport vorbereitet. Die Erfinder haben festgestellt, dass etwa 400 Module innerhalb eines Monats in einer Vorfertigung herstellbar sind. Da für einen Prototypbau eines Flughafenterminals der noch zu beschreibenden Art nur etwa 406 Module benötigt werden, kann das gesamte Gebäude innerhalb etwa eines Monats vorgefertigt werden.

Am Aufstellort können in der weiteren Produktionsphase nach Vorbereitung des Baufeldes die einzelnen Raumeinheiten wie Baukästen aufeinander gestapelt werden, sobald Streifenfundamente o.ä. fertig sind. Die Module werden untereinander entweder verschraubt oder durch Schweißnähte miteinander verbunden. Dazu ist keine aufwändige Montagetechnik erforderlich, sondern lediglich übliches Werkzeug und ein mobiler Kran, der in der Lage ist, die schwerste Moduleinheit zu transportieren an den Ort und in der Höhe, in der dies im Terminalgebäude vorgesehen ist.

Letztlich können in einer siebten Phase die vorbereiteten Energie- und Infrastrukturanschlüsse an das Terminal angekoppelt werden und das Terminal ist schlüsselfertig bzw. betriebsbereit.

Diese Betriebsbereitschaft verlangt natürlich, dass die komplett vorgefertigten Raumeinheiten im Vorfertigungswerk bereits getestet und geprüft wurden, so dass am Aufstellort ein erneutes Testen z.B. von Leitungen entfällt.

Falls dies gewünscht wird oder erforderlich ist, kann an ein so vorgefertigtes Terminalgebäude eine Fassade vorgehängt oder ein Dach aufgebracht werden, beispielsweise um bei einem Wüstenklima eine hinterlüftete Fassade zu erreichen oder um bei Unwetter entsprechende Abfangmöglichkeiten für Niederschläge und Kälte zu haben.

Anhand eines Ausführungsbeispiels soll die Erfindung näher dargestellt werden. Es zeigen:
- Fig. 1: den Grundriss eines Terminals im Erdgeschoss,
- Fig. 2: den Grundriss des 1. Obergeschosses des Terminals,
- Fig. 3: den Grundriss des 2. Obergeschosses des Terminals,
- Fig. 4: den Grundriss eines 3. Obergeschosses des Terminals,
- Fig. 5: eine Draufsicht auf das Dach eines Terminals gemäß den Fig. 1 bis 4,
- Fig. 6: eine Ansicht des Gebäudes entlang der Rasterlinie Aa in Fig. 1,
- Fig. 7: einen Schnitt zwischen den Achsen Ah und Ai gemäß Fig. 1,
- Fig. 8: eine Vorderansicht des Gebäudes entlang der Rasterachse A18 gemäß Fig. 1.
- Fig. 9: eine Hinteransicht des Gebäudes entlang Rasterachse A1 gemäß Fig. 1
- Fig. 10: eine vergrößerte Ansicht der Fig. 1 im Bereich der Bezugsziffer 10,
- Fig. 11: Abschnitt des Gebäudes im 1. Stock oberhalb des Bereichs der Bezugsziffer 10,
- Fig. 12: einen Ausschnitt aus dem 4. Obergeschoss zwischen den Rasterachsen Am und An sowie A5 bis A7,
- Fig. 13: ein vergrößerter Ausschnitt aus dem 4. Obergeschoss zwischen den Rasterachsen An - Ap und A2 bis A4
- Fig. 14: Standardrahmen eines Boxcontainers gemäß dem Stand der Technik.

Das gesamte Gebäude ist durch ein Horizontalraster mit den Planlinien 1 bis 18 sowie in der zweiten Achse mit den Rasterlinien A bis P für alle Flächen der vier Etagen aufgeteilt. Die Rasterlinien 1 bis 18 haben jeweils einen Abstand entsprechend einer Containerbreite, während die Rasterlinien mit den Buchstaben A bis P jeweils einen Abstand entsprechend einer Containerlänge haben. In diesem Fall handelt es sich um die Grundmaße eines 20-Fuß-Containers mit einer Länge von 6 m und einer Breite von etwa 2,5 m.

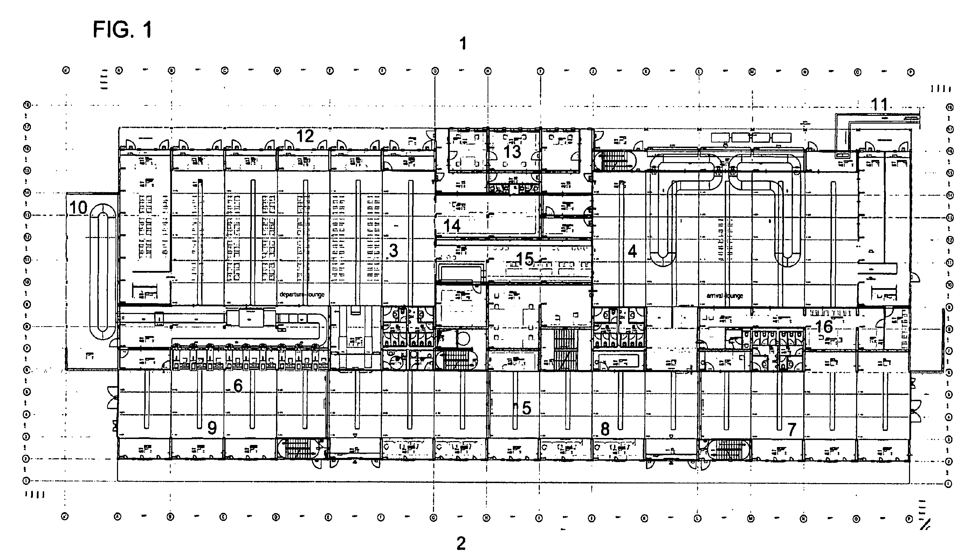

Figur 1 zeigt den Grundriss eines Ausführungsbeispiels eines Terminals im Erdgeschoss. Der Grundriss zeigt in der Figur 1 von unten nach oben horizontalen Rasterlinien 1 bis 18 und vertikaler Richtung Rasterlinien A bis P. Links von der Rasterlinie A ist noch eine Rasterlinie Av zu sehen. Im Folgenden werden die Rasterlinien auch als Achsen mit dem Großbuchstaben A und der folgenden Liniennummer sowie dem Großbuchstaben A und einem zusätzlichen Buchstaben für die andere Rasterachse bezeichnet. Die Felder zwischen den Schnittpunkten der Rasterachsen oder Rasterlinien entsprechen genau dem Grundgriss eines Standardcontainers, wie er nach ISO genormt ist, in diesem Fall haben die Fläche zwischen den Rasterlinien die Grundmaße eines 20-Fuss-Containers. Zwischen den Rasterlinien A und B beträgt der Abstand rund 20-Fuss, dies sind 6,05 m, während der Abstand zwischen beispielsweise der Rasterlinie 16 und 15 8-Fuss, also 2,45 m entspricht. In den

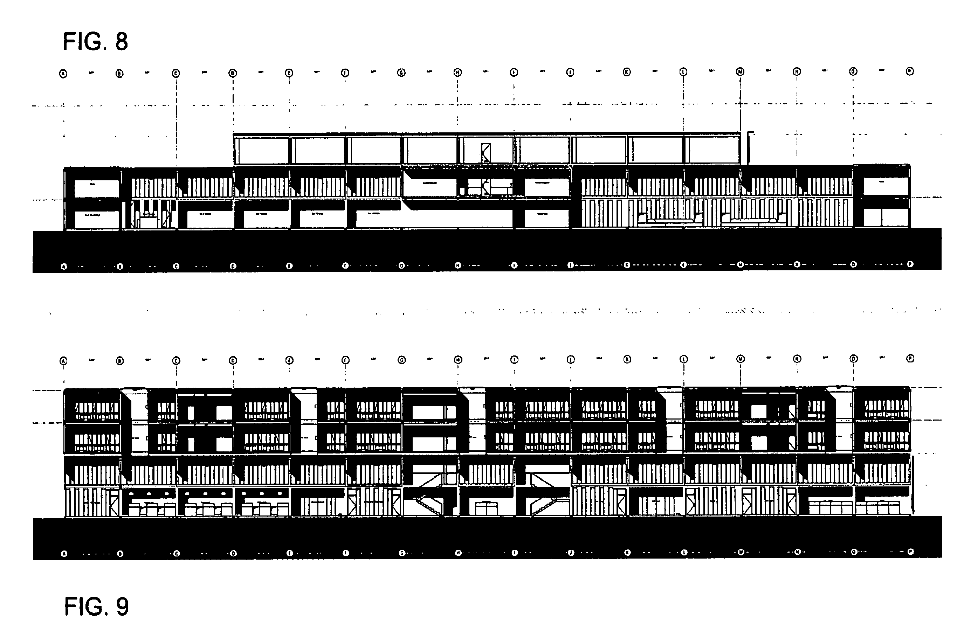

Figuren 8 und 9 sind die Etagenhöhen bzw. Höhen der Raumeinheiten zu sehen, sie betragen im Rasterabstand ein willkürlich gewähltes Maß von 3,20 m, woraus sich eine Innenraumhöhe für jede Raumeinheit bzw. jedes Modul von 2,75 m ergibt.

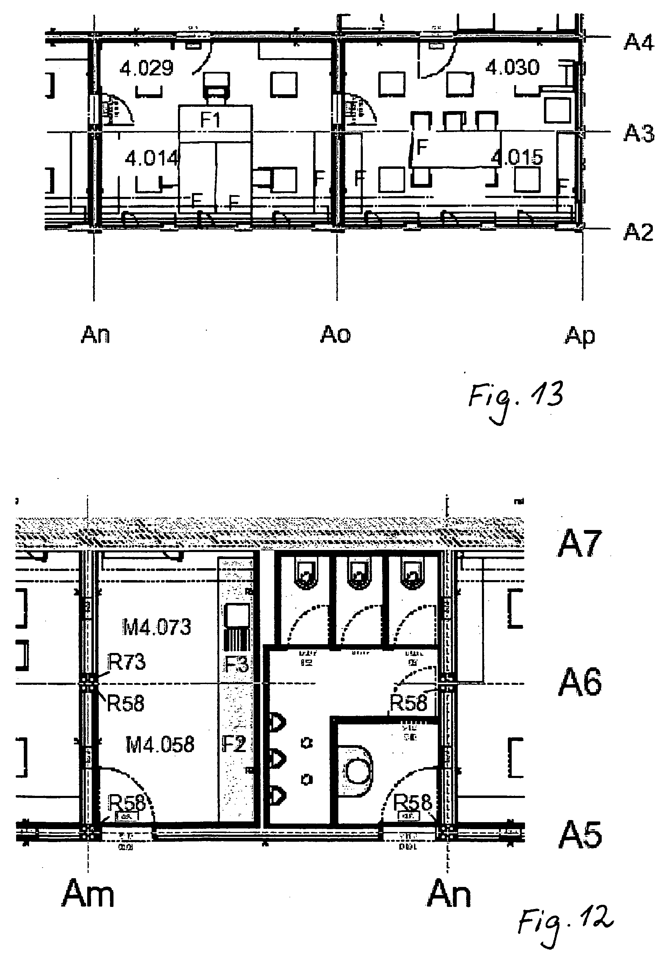

Es ist deutlich zu erkennen, dass jedem Feld zwischen den Rastern eine Raumeinheit zugeordnet ist, in vergrößertem Maßstab ist es insbesondere in Figuren 12 und 13 zu erkennen.

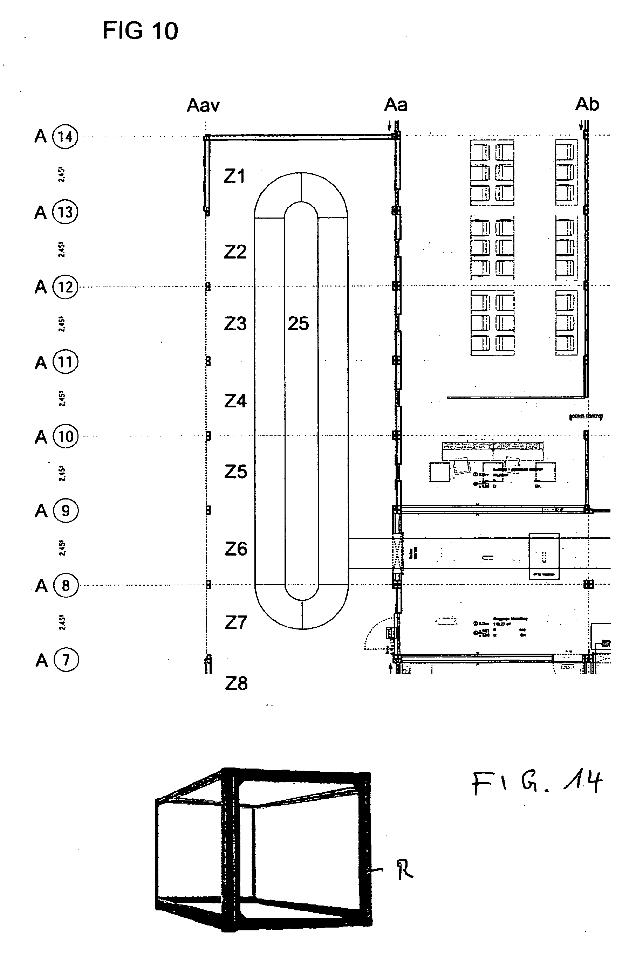

Bei der Prototypdefinition des Rasters für den Flughafen waren zunächst nur die Rasterlinien A1 bis A18 und AA bis AP vorgesehen, wobei alle Bauteile des Terminals sich innerhalb der Rasterlinien befanden mit Ausnahme des Infrastrukturzuganges 11 für das Terminal. Bei einer weiteren Betrachtung fiel auf, dass der Flughafen mit Luftseite 1 und der so genannten Landseite 2, dem Zugang für Passagiere, sinnvollerweise noch um ein Gepäckband 10 erweitert werden sollte. Deshalb wurde zwischen den Rasterlinien A6 und A14 parallel zur Rasterlinie AA noch eine Rasterlinie Aav hinzugefügt und dort befinden sich weitere Zusatzmodule (Figur 10) Z1 bis Z8, die einen Gepäckrollgang 25 beherbergen. In dieser Art und Weise ist es möglich an allen Stellen oder in mehreren Etagen Zusatzmodule unterzubringen, wie der Fachmann im Zuge der Beschreibung erkennen wird. An der Landseite 2, dem Zugang für die Passagiere befinden sich, nachdem er einen öffentlichen Raum 5 betreten, rechts beispielsweise ein Reisebürocounter 8 und ein Mietwagencounter 7 bzw. auf der linken Seite ein Ticketcounter 9. Nach Erwerb eines Tickets kann der Passagier zu den Check-In-Countern 6 gehen, von denen hier neun dargestellt sind, um durch einen Kontrollbereich schließlich in die Abflughalle 3 zu gelangen. Vor dem Abflug kann er sich in einem Duty-Free-Shop 14 Reisebedarf beschaffen oder im Restaurant 15 speisen. Bei Aufruf des Fluges kann er, das ihm zugewiesene Gate 12 passieren, um zur Luftseite 1 zu gelangen, an der beispielsweise ein Flugzeug zu seiner Destination bereit steht. Es ist zu erkennen, dass auch noch Verwaltungsbüros 13 vorgesehen sind für die luftseitig tätigen Mitarbeiter, die dort ihrer Tätigkeit nachgehen müssen. Auf der rechten Seite der Figur 1 ist der Zugang 11 für ankommende Passagiere zu erkennen, die in die Ankunftshalle 4 gelangen, um dort an den Gepäckbändern ihr Gepäck in Empfang zu nehmen und das Gebäude via der öffentlichen Fläche 5 verlassen zu können, beispielsweise um sich einen Mietwagen am Mietwagencounter 7 zu verschaffen.

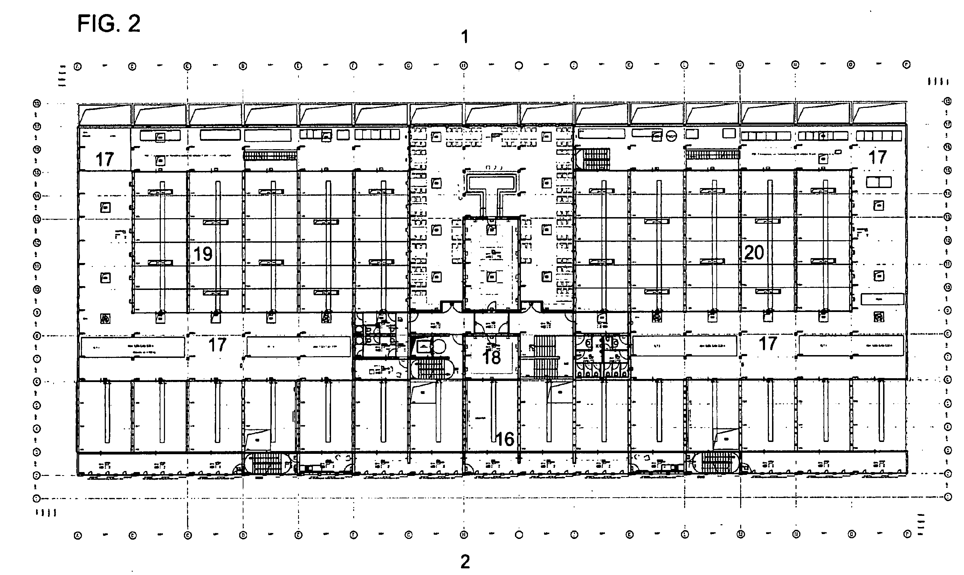

Figur 2 zeigt dasselbe Raster wie in der Figur 1 zu sehen ist, jedoch fehlt hier die Achse AAv weil das Gepäckband im Bereich 10 nur in Raumeinheiten im Erdgeschoss untergebracht ist. Im ersten Obergeschoss sind beispielsweise Technikflächen 17 vorgesehen aber auch Nebenflächen 18 für das Restaurant bzw. weitere Büros 16 entlang der gesamten Gebäudefront an der Landseite 2. Der Bereich 19 bezeichnet die Lufträume über der Abflughalle während der Bereich 20, den Luftraum über der Ankunftshalle bezeichnen.

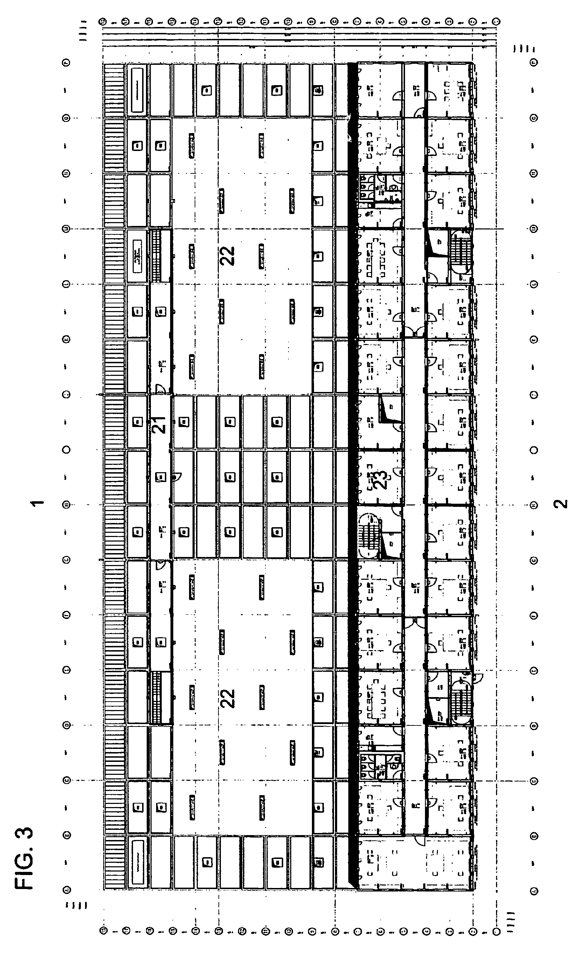

In Figur 3 ist der Grundriss des zweiten Obergeschosses des Terminals zu sehen, wobei hier mit der Bezugsziffer 22 die Dachflächen des ersten Geschosses bezeichnet sind, da im dritten Geschoss oberhalb der Abflughalle und der Ankunftshalle keine Raumeinheiten existieren; Lediglich im Bereich 2.1 ist eine Technikbrücke vorhanden, die die Technikflächen in Figur 2 verbindet. Landseitig sind mit 23 zahlreiche Büros für Verwaltung oder sonstigen Bedarf, zum Beispiel Konferenzräume zu erkennen.

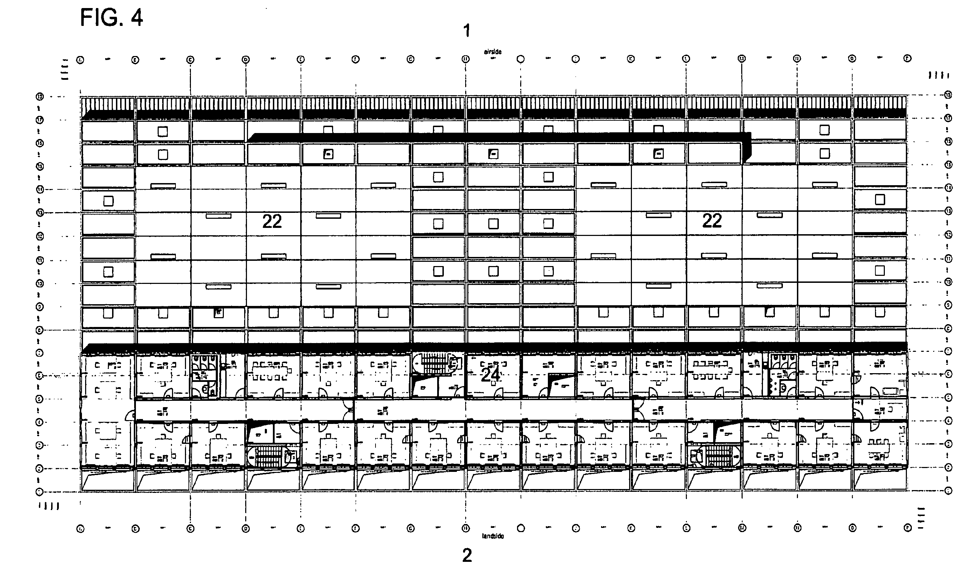

In gleicher Weise zeigt Figur 4 weitere Büro oder Verwaltungsräume 24 auf der Landseite 2 während zur Luftseite 1 in diesem Grundgriss lediglich noch das Dach 22 über der Ankunfts- und der Abflughalle zu sehen sind.

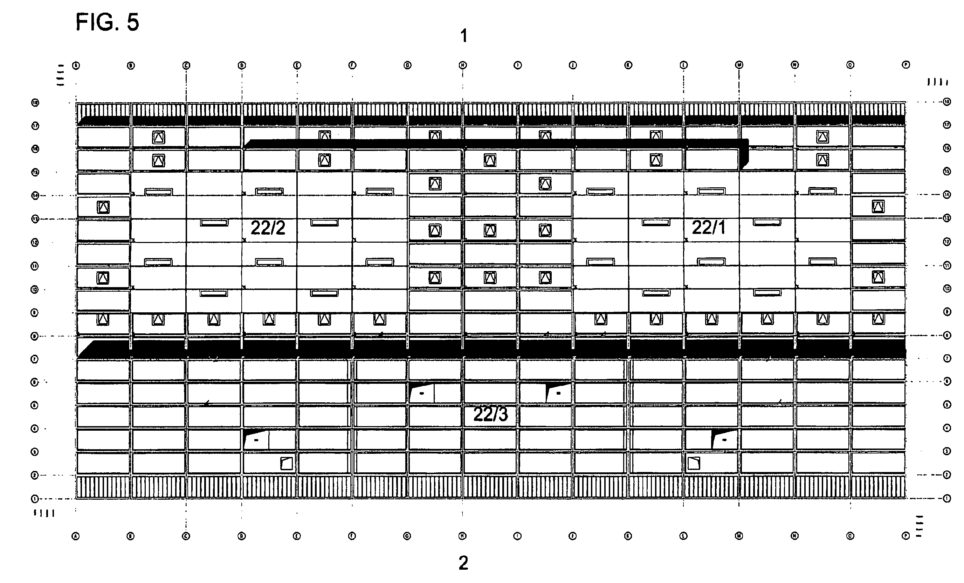

Figur 5 zeigt als Draufsicht auch das Dach 22 nochmals die Konzeption des Terminals mit den verschiedenen Rasterachsen.

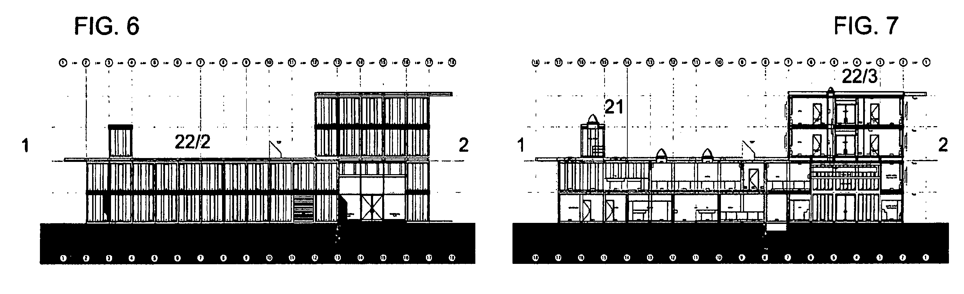

Figur 6 stellt an eine Ansicht des Terminalgebäudes entlang der Rasterlinie A in Figur 1 dar, also ohne die zusätzlichen Raumeinheiten mit dem Gepäckband, während Figur 7 einen Schnitt zwischen den Achsen Ah und Ai gemäß Figur 1 durch das Gebäude von der Luftseite 1 zur Landseite 2 darstellt. Es ist deutlich zu sehen, dass im Bereich der Abflughalle bzw. der Ankunftshalle das Terminal nur zweistöckig ist mit der Technikbrücke 21, während das Gebäude landseitig vierstöckig ist und durch ein Dach 22/3 begrenzt wird.

Figur 8 zeigt die Vorderansicht des Gebäudes von der Luftseite her, also eine Ansicht, die der Rasterachse A18 entspricht. Im oberen Teil des Gebäudes ist eine vorgehängte Fassade angedeutet, die der Beschriftung aber auch der Klimatisierung des Gebäudes dienen kann.

Figur 9 zeigt demzufolge die Rückseite oder die Landseite 2 des Terminals also entlang der Rasterachse 1.

In Figur 10 ist eine vergrößerte Darstellung des Bereiches 10 mit den Zusatzmodulen, nämlich den Raummodulen Z1 bis Z8 zu sehen, in dem das Gepäckband 25 angeordnet ist, das nach Planung des Prototyps des Terminals der ursprünglich nur bis zu Achsen Aa reichen sollte, mit diesem Vorbau versehen wurde, wozu eine weitere Achse AAv zwischen den Rasterlinien A14 bis A6 geplant wurde. Z1 bis Z8 stellen jeweils eine Raumeinheit bzw. ein Modul dar.

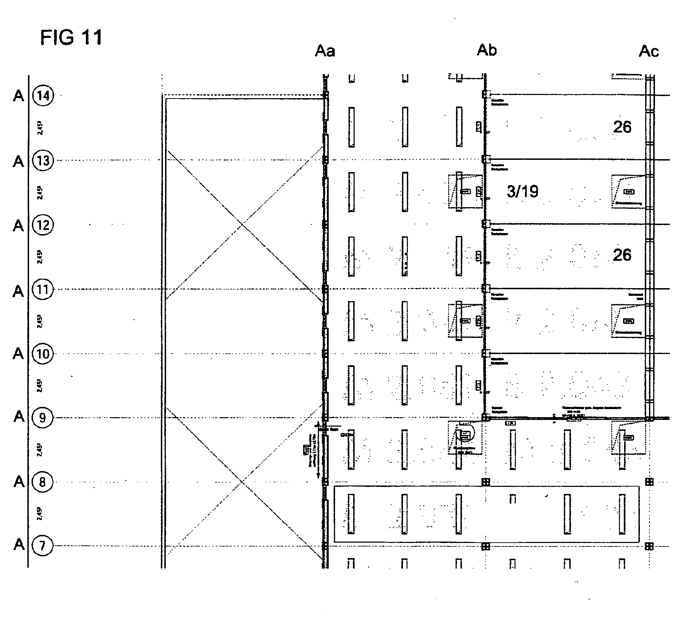

Figur 11 zeigt denselben Bereich, jedoch jetzt das erste Obergeschoss; es ist zu erkennen, dass hier kein zusätzlicher Vorbau existiert, sondern nur der Grundgriss des Terminals in diesem Bereich zwischen den Rasterachsen Aa bis Ac bzw. A7 bis A14 zu erkennen ist. Im Bereich der Abflughalle dessen Luftraum im ersten Obergeschoss zu sehen ist, ist zu erkennen, dass die Halle durch ein Trägersystem 26 überspannt wird. Dieses Trägersystem ist in Abschnitten vorgefertigt worden, die kürzer sind als Raumeinheiten, so dass sie in den Leercontainern / Leermodulen, beispielsweise Z1 bis Z8 zum Aufstellort transportiert werden konnten und dort in der hier dargestellten Weise als Träger für das Hallendach über dem Abflugbereich dienen.

Figur 14 zeigt mit R den Rahmen eines handelsüblichen Boxcontainers nach dem Stand der Technik, ohne Wände, ohne Decke und ohne Boden.

Die Figur 12 und 13 zeigen vergrößert dargestellte Abschnitte des Terminals und zwar aus dem vierten Obergeschoss des Terminals. In Figur 12 sind zwei Raumeinheiten / Module mit der Bezeichnung M4.073 und M4.058 nebeneinander angeordnet und ergeben zusammen auf der linken Seite eine Pantry und auf der rechten Seite einen Sanitärraum. Jedes einzelne Modul beispielsweise das Modul M4.058 besteht aus einem Quadratrohrrahmen, dessen Vertikalstreben mit der Bezugsziffer R58 angegeben sind. Die übrigen Kanten des in der gleichen Bauweise hergestellten Containers, wie beim Stand der Technik gemäß Figur 14 zu erkennen, sind in dieser Figur 12 nicht dargestellt. Die Raumeinheit M4.058 bzw. das Modul M4.058 ist in diesem Fall angeordnet zwischen den Rastenachsen Am und An einerseits, sowie den Rasterlinien A5 und A6 andererseits. An ihn grenzt zwischen den Rasterachsen A6 und A7 das Modul M4.073 an und ist mit diesem durch Schweißnähte an den Rohrrahmen R58 bzw. R73 verschweißt, so dass die Module M4.058 und M4.073 unverrückbar miteinander verbunden sind. Dies erlaubt es, eine Pantry ab Herstellerwerk zunächst in den Teilen F2 und F3 in beiden Modulen zuzuordnen und auf der Baustelle werden die Einbauten F2 und F3 nur noch miteinander gekoppelt. Gleiches trifft für die Schnittstelle durch die Sanitärzelle zu. Schon im Herstellerwerk wurde vorgesehen an welcher Stelle Türen zu dem Modul M4.058 einzubauen sind bzw. ein Fenster im Modul M4.073 vorzusehen war.

Während Figur 12 zwei nebeneinander liegende Moduleinheiten zeigt, ist in Figur 13 der Maßstab etwas verkleinert worden und es sind vier Moduleinheiten M4.014 und M4.015 sowie M4.029 und M4.030 an den Rohrrahmen bzw. Hohlprofilrahmen miteinander derart verschweißt, das sich eine Büroeinheit aus einem Büro und einem Besprechungszimmer ergibt, in dem die Möbel F schon bei der Herstellung des Raummoduls fix und fertig montiert wurden. Lediglich im Falle des Moduls M4.029 musste das Möbelstück F1 auf der Baustelle verrückt werden in die Position, die hier dargestellt ist, um eine entsprechende Möbellandschaft zu realisieren.

Alle Raummodule haben Raumkanten, die aus quadratischen Hohlprofilen des Typs MSH 100mm x 100mm mit Wanddicken zwischen 6 und 12 mm bestehen. Diese Rahmen oder Modulgrundkörper sind derart stabil, dass sowohl die statische Funktion in dem fertigen Terminal als auch die dynamische Belastung während des Transportes problemlos aufgenommen werden kann. Für den Fachmann ist klar, dass eine Zuordnung der Module oder Container in der in Figur 12 oder Figur 13 gezeigten Art und Weise es erfordert, dass im Herstellerwerk die Seiten des Moduls, die keine Wände haben temporär wetterfest zu verschließen sind, damit während des Transportes vom Herstellort zur Baustelle nicht unnötig Unrat in die Module gerät. Die Sanitärzelle gemäß Figur 12 ist so vorbereitet, dass alle Wasseranschlüsse und Stromanschlüsse fix und fertig in den Wänden bzw. Decken und Böden verlegt sind und nur bei den Raummodul überschreitenden Leitungen an einer Schnittstelle durch entsprechende Schraub-, Press oder Steckverbindung die Energieleitungen gekoppelt werden müssen.

Die Bezugszeichen bedeuten im Einzelnen
- 1: Luftseite
- 2: Landseite
- 3: Abflug
- 4: Ankunft
- 5: öffentliche Fläche / zugang
- 6: Check-In-Counter
- 7: Mietewagencounter
- 8: Reisebürocounter
- 9: Ticketcounter
- 10: Gepäck Ankunft/Abflug
- 11: Ankunft Eingang
- 12: Abflug Ausgang
- 13: Verwaltung Ebene 0
- 14: kommerzielle Fläche Abflug (Shops)
- 15: Restaurant
- 16: Büros
- 17: Technikfläche
- 18: Restaurant Nebenfläche
- 19: Luftraum Abflughalle
- 20: Luftraum Ankunftshalle
- 21: Technik
- 22: Dachflächen
- 23: Büros Verwaltung Ebene 2
- 24: Büros Verwaltung Ebene 3
- 25: Förderband
- 26: Tragsystem
- F: Möbel
- Z: Zusatzmodul
- Aa-p: Rasterlinie
- A1-14: Rasterlinie
- M: Modul
- R: Rahmenteil

## Patentansprüche

1. Passagierterminal aus mobilen Raumeinheiten (M),
welche mittels üblicher Transportfahrzeuge für genormte Container zu Lande, zu Wasser und zu Luft an den vorbestimmten Aufstellort transportiert und dort in kurzer Zeit nach vorgegebenem Raster (1-18, A-P) zusammengefügt werden können,
**dadurch gekennzeichnet, dass**
alle für den Passagierverkehr notwendigen und zu einem funktionsfähigen Passagierterminalgebäude gehörenden Einrichtungen, mindestens für die Terminalbereiche Check-in (6), Ankunft (11), Abgang (12), Gepäckabfertigung (10), Terminalspezifische Technik (21), Verwaltung (13), Gebäudetechnik, aus modulartigen, zueinander komplementären, für sich stabilen Raumeinheiten vorfertigbar sind.

2. Passagierterminal nach Anspruch 1, **dadurch gekennzeichnet, dass** alle Raumeinheiten (M) den Längen und Breiten einem nach DIN / ISO genormten Transportcontainer entsprechen und in der Höhe typisiert sind.

3. Passagierterminal nach Anspruch 2, **dadurch gekennzeichnet, dass** alle Raumeinheiten (M) in den Längen und Breiten einem nach DIN / ISO genormten Boxcontainer der Bezeichnung 1 C entsprechen.

4. Passagierterminal nach einem der vorhergehenden Ansprüche, **dadurch gekennzeichnet, dass** alle Raumeinheiten (M) quaderförmig ausgebildet sind und Stahlrahmen aus genormten Hohlprofilen haben.

5. Passagierterminal nach einem der vorhergehenden Ansprüche, **dadurch gekennzeichnet, dass** alle vertikalen Lasten von den Stahlrahmen der Raumeinheiten (M) getragen werden.

6. Passagierterminal nach einem der vorhergehenden Ansprüche, **dadurch gekennzeichnet, dass** die Raumeiheiten (M), am Aufstellort mit standardisierten Verschraubungen standsicher miteinander verschraubt oder verschweißt sind.

7. Passagierterminal nach einem der vorhergehenden Ansprüche, **dadurch gekennzeichnet, dass** sämtliche Verbindungen von Rohren und Leitungen zwischen den Raumeinheiten (M) als am Aufstellort nur noch durch Steck-, Press- oder Schraubverbindungen realisierbar sind.

8. Passagierterminal nach einem der vorhergehenden Ansprüche, **dadurch gekennzeichnet, dass** jede modulare Raumeinheit (M) mit möglichst kompletter Vorinstallation entsprechend seiner Funktion im Terminal vorgefertigt ist.

9. Passagierterminal nach einem der vorhergehenden Ansprüche, **dadurch gekennzeichnet, dass** es zusätzlich mit Raumeinheiten (M) für den internationalen Luftverkehr ausgestattet ist umfassend kommerziell verwertbare Flächen, Bistros, Dutyfree-Shops (14), öffentliche Restaurants (15), Mietwagen-, Reisebüro- und Ticketcounter (7, 8,10).

10. Passagierterminal nach einem der vorhergehenden Ansprüche, **dadurch gekennzeichnet, dass** es modular horizontal und vertikal erweiterbar ist.

11. Passagierterminal nach einem der vorhergehenden Ansprüche, **dadurch gekennzeichnet, dass** die modularen Raumeinheiten (M) demontierbar und anderenorts wieder montierbar sind.

12. Passagierterminal nach einem der vorhergehenden Ansprüche, **dadurch gekennzeichnet, dass** alle technischen Installationen und Möblierungen am Vorfertigungsort in die Raumeinheiten (M) eingebaut und für den Transport zum Aufstellort sicher fixiert werden.

13. Verfahren zur Erstellung eines Passagierterminals umfassend die Schritte:
- Konstruieren des Terminals für eine Standardgröße mit einer geringsten angenommenen Passagierzahl,
- Einplanen aller mindestens notwendigen Funktionsbereiche: Passagiererfassung bzw. -abfertigung, Abgangszone, Ankunftszone, öffentliche/kommerzielle Flächen, Terminaltechnik, Verwaltung und Gebäudetechnik,
- Planerisches Zerteilen des Terminals horizontal und vertikal in kubische Raster / Raumeinheiten (M) mit Längen und Breiten entsprechende genormter DIN / ISO-Container mit zu fixierender Höhe,
- Optimieren der Funktionsbereiche durch Einfügen von Schnittstellen zwischen den Raumeinheiten,
- Bau und Transport der funktionsfähigen Raumeinheiten zum Aufstellort,
- Baukastenmäßiges Zusammensetzen der Module des Terminalgebäudes am vorbereiteten Aufstellort.

14. Verfahren nach Anspruch 13, **dadurch gekennzeichnet, dass** durch Einfügen oder Anfügen von Raumeinheiten (M) die Zahl der Passagiere, die im Terminal abgefertigt werden sollen, erhöht wird.

15. Verfahren nach Anspruch 13 oder 14, **dadurch gekennzeichnet, dass** am Aufstellort für das Terminal alle erforderlichen Energie- und Infrastrukturanschlüsse unabhängig vom zu erstellenden Terminalgebäude bis zu Schnittstellen vorbereitet werden.

16. Verfahren nach einem der Ansprüche 13, 14 oder 15, **dadurch gekennzeichnet, dass** zur Überspannung von Lufträumen (19, 20) im oder am Terminal modulare Tragsysteme aus modularen Elementen montiert werden, transportiert in den Raumeinheiten (M), die im Terminal nur statische Funktion haben.

17. Verfahren nach einem der Ansprüche 13 - 16, **dadurch gekennzeichnet, dass** die vorgefertigten Raumeinheiten (M) im Vorfertigungswerk getestet und geprüft werden und am Aufstellort nach der Montage sofort in Betrieb genommen werden.

18. Verfahren nach einem der Ansprüche 13 - 17, **dadurch gekennzeichnet, dass** durch eine vorgehängte modulare Fassade und / oder ein entsprechendes modular aufgebautes Dach das Terminalgebäude den klimatischen Verhältnissen am Aufstellort angepasst wird.

## Claims

1. A passenger terminal made of mobile spatial units (M), which can be transported using typical transport vehicles for standardized containers by land, water, and air to the predetermined set-up location and assembled there in a short time according to a predefined pattern (1-18, A-P),
**characterized in that** all devices which are required for passenger traffic and are associated with a functional passenger terminal building, at least for the terminal areas check-in (6), arrival (11), departure (12), baggage processing (10), terminal-specific technology (21), management (13), and building technology, can be prefinished from modular room units, which are complementary to one another and are stable per se.

2. The passenger terminal according to Claim 1, **characterized in that** all spatial units (M) correspond in length and width to a transport container standardized according to DIN/ISO and are standardized in height.

3. The passenger terminal according to Claim 2, **characterized in that** all spatial units (M) correspond in length and width to a box container standardized according to DIN/ISO of the designation 1 C.

4. The passenger terminal according to one of the preceding claims, **characterized in that** all spatial units (M) are implemented as cuboid and have steel frames made of standardized hollow profiles.

5. The passenger terminal according to one of the preceding claims, **characterized in that** all vertical loads are carried by the steel frames of the spatial units (M).

6. The passenger terminal according to one of the preceding claims, **characterized in that** the spatial units (M) are screwed or welded to one another stably at the set-up location using standardized screw connections.

7. The passenger terminal according to one of the preceding claims, **characterized in that** all connections of pipes and lines between the spatial units (M) are implementable at the set-up location only by plug, press, or screw connections.

8. The passenger terminal according to one of the preceding claims, **characterized in that** each modular spatial unit (M) is prefinished having the most complete possible pre-installation corresponding to its function in the terminal.

9. The passenger terminal according to one of the preceding claims, **characterized in that** it is additionally equipped with spatial units (M) for international air traffic, comprising commercially exploitable areas, bistros, duty-free shops (14), public restaurants (15), rental car, travel agency, and ticket counters (7, 8, 10).

10. The passenger terminal according to one of the preceding claims, **characterized in that** it is modularly expandable horizontally and vertically.

11. The passenger terminal according to one of the preceding claims, **characterized in that** the modular spatial units (M) can be removed and reinstalled in another location.

12. The passenger terminal according to one of the preceding claims, **characterized in that** all technical installations and furnishings are installed into the spatial units (M) at the pre-finishing location and are securely fixed for the transport to the set-up location.

13. A method for constructing a passenger terminal comprising the following steps:
- design of the terminal for a standard size having a smallest assumed passenger number,
- budgeting of all minimally required functional areas: passenger registration and processing, departure zone, arrival zone, public/commercial areas, terminal technology, management, and building technology,
- planar division of the terminal horizontally and vertically into cubic patterns/spatial units (M) having lengths and widths corresponding to standardized DIN/ISO containers having height to be fixed,
- optimization of the functional areas by introducing interfaces between the spatial units,
- construction and transport of the functional spatial units to the set-up location,
- building-block assembly of the modules of the terminal building at the prepared set-up location.

14. The method according to Claim 13, **characterized in that** the number of the passengers who are to be processed in the terminal is increased by introducing or adding on spatial units (M).

15. The method according to Claim 13 or 14, **characterized in that** all power and infrastructure connections required for the terminal are prepared up to interfaces at the set-up location independently of the terminal building to be constructed.

16. The method according to one of Claims 13, 14, or 15, **characterized in that**, to span air spaces (19, 20) in or on the terminal, modular support systems made of modular elements are installed, transported in the spatial units (M) which only have a static function in the terminal.

17. The method according to one of Claims 13 - 16, **characterized in that** the pre-manufactured spatial units (M) are tested and checked in the pre-manufacturing factory and are immediately put into operation after installation at the set-up location.

18. The method according to one of Claims 13 - 17, **characterized in that** the terminal building is adapted to the climatic conditions at the set-up location by a modular curtain facade and/or a corresponding modularly constructed roof.

## Revendications

1. Terminal passagers constitué d'unités spatiales (M) mobiles, lesquelles peuvent être transportées au moyen de véhicules de transport habituels pour conteneurs normalisés sur terre, sur mer et en l'air sur un point de pose prédéfini et rapidement, et peuvent être regroupées selon une grille prédéterminée (1-18, A-P),
**caractérisé en ce que** toutes les installations nécessaires à la circulation des passagers et appartenant à un bâtiment de terminal passagers opérationnel, au moins pour les zones de terminal d'enregistrement (6), d'arrivée (11), de sortie (12), d'enregistrement des bagages (10), de technique spécifique au terminal (21), de administration(13), de technique du bâtiment, peuvent être préfabriquées à partir d'unités spatiales stables, complémentaires les unes des autres et modulaires.

2. Terminal passagers selon la revendication 1, **caractérisé en ce que** toutes les unités spatiales (M) correspondent en longueur et en largeur à un conteneur de transport normalisé DIN / ISO et sont typisées en hauteur.

3. Terminal passagers selon la revendication 2, **caractérisé en ce que** toutes les unités spatiales (M) correspondent en longueur et en largeur à un conteneur box normalisé DIN / ISO de type 1 C.

4. Terminal passagers selon l'une des revendications précédentes, **caractérisé en ce que** toutes les unités spatiales (M) sont parallélépipédiques et ont des cadres métalliques constitués de profilés creux normalisés.

5. Terminal passagers selon l'une des revendications précédentes, **caractérisé en ce que** toutes les charges verticales sont supportées par les cadres métalliques des unités spatiales (M).

6. Terminal passagers selon l'une des revendications précédentes, **caractérisé en ce que** les unités spatiales (M) sont vissées avec des vis normalisées ou soudées entre elles de manière stable sur le lieu de pose.

7. Terminal passagers selon l'une des revendications précédentes, **caractérisé en ce que** l'ensemble des liaisons de tuyaux et conduits entre les unités spatiales (M) peuvent être effectués uniquement par des liaisons d'emboîtement, de serrage ou vissées sur le lieu de pose.

8. Terminal passagers selon l'une des revendications précédentes, **caractérisé en ce que** chaque unité spatiale (M) modulaire est préfabriquée avec la pré-installation la plus complète possible conformément à sa fonction dans le terminal.

9. Terminal passagers selon l'une des revendications précédentes, **caractérisé en ce qu'**il est muni en outre d'unités spatiales (M) pour le transport aérien international, comprenant des surfaces exploitables à des fins commerciales, des bistros, des boutiques duty free (14), des restaurants publics (15), des guichets de location de véhicules, d'agences de voyage et de billetterie (7, 8, 10).

10. Terminal passagers selon l'une des revendications précédentes, **caractérisé en ce qu'**il est extensible horizontalement et verticalement de manière modulaire.

11. Terminal passagers selon l'une des revendications précédentes, **caractérisé en ce que** les unités spatiales (M) modulaires sont démontables et peuvent être montés de nouveau sur un autre lieu.

12. Terminal passagers selon l'une des revendications précédentes, **caractérisé en ce que** toutes les installations techniques et l'ameublement sont intégrés sur le lieu de préfabrication et fixés de manière sécurisée pour le transport jusqu'au lieu de pose.

13. Procédé de fabrication d'un terminal passagers comprenant les étapes de :
- construction du terminal pour une dimension standard avec un nombre de passagers pris en compte le plus faible,
- planification de toutes les zones fonctionnelles au moins indispensables : embarquement des passagers, zone de départ, zone d'arrivée, surfaces publiques/commerciales, technique du terminal, administration et technique du bâtiment,
- répartition en plans du terminal, horizontalement et verticalement en grilles / unités spatiales (M) cubiques avec des longueurs et des largeurs correspondant à des conteneurs de transport normalisés DIN / ISO avec une hauteur à fixer,
- optimisation des zones fonctionnelles par l'ajout de passerelles entre les unités spatiales,
- construction et transport des unités spatiales opérationnelles vers le lieu de pose,
- composition modulaire des unités spatiales du terminal passagers sur le lieu de pose préparé.

14. Procédé selon la revendication 13, **caractérisé en ce que** le nombre de passagers devant être embarqués dans le terminal est augmenté par l'intégration ou l'ajout d'unités spatiales (M).

15. Procédé selon la revendication 13 ou 14, **caractérisé en ce que** tous les raccordements d'énergie et d'infrastructure nécessaires pour le terminal sont préparés jusqu'aux passerelles, indépendamment du bâtiment de terminal à ériger.

16. Procédé selon l'une des revendications 13, 14 ou 15, **caractérisé en ce que** pour superposer des espaces aériens (19, 20) dans ou sur le terminal, des systèmes porteurs modulaires constitués d'éléments modulaires sont montés, transportés dans les unités spatiales (M), et n'ont qu'une fonction statique dans le terminal.

17. Procédé selon l'une des revendications 13 à 16, **caractérisé en ce que** les unités spatiales (M) préfabriquées sont testées et contrôlées dans l'atelier de préfabrication et mises immédiatement en service sur le lieu de pose après montage.

18. Procédé selon l'une des revendications 13 à 17, **caractérisé en ce que** le bâtiment de terminal est adapté aux conditions climatiques du lieu de pose par une façade modulaire en rideau et/ou un toit modulaire correspondant.
